# EUROPÄISCHE PATENTANMELDUNG

(11) **EP 3 825 051 A1**
(43) Veröffentlichungstag der Anmeldung: **26.05.2021**
(21) Anmeldenummer: 19210533.6
(22) Anmeldetag: 21.11.2019
(51) Int. Cl.: B23K 9/073, B23K 9/167, B23K 9/173, B23K 9/095, B23K 103/10, B23K 103/08

(54) **VERFAHREN UND VORRICHTUNG ZUM SCHWEISSEN MIT EINER NICHTABSCHMELZENDEN ELEKTRODE**

(71) Anmelder: FRONIUS INTERNATIONAL GmbH, 4643 Pettenbach (AT)
(72) Erfinder: LATTNER, Peter, 4633 Pettenbach (AT); ARTELSMAIR, Josef, 4643 Pettenbach (AT)
(74) Vertreter: Sonn & Partner Patentanwälte

(57) **Zusammenfassung**

Die Erfindung betrifft ein Verfahren und eine Vorrichtung (1) zum Schweißen mit einer nichtabschmelzenden Elektrode (2), wobei ein mit einer Schweißfrequenz (f_{S}) in der Polarität wechselnder Schweißstrom (I) zwischen der Elektrode (2) und einem Werkstück (4) zur Bildung eines Lichtbogens (5) eingeprägt wird, und auf die Polarität vor dem Wechsel der Polarität rückgepolt wird, wenn die Spannung (U) oberhalb eines Spannungsschwellwerts (U_{S+}, U_{S-}) und der Schweißstrom (I) unterhalb eines Stromschwellwerts (I_{S+}, I_{S-}) liegt. Erfindungsgemäß wird die Schweißspannung (U) und der Schweißstrom (I) nach einer voreingestellten Zeitdauer (Δt) nach dem Wechsel der Polarität mit dem Spannungsschwellwert (U_{S}, U_{S+}, U_{S}-) und Stromschwellwert (I_{S+}, I_{S-}) verglichen, und zusätzlich die Leistung (P) am Lichtbogen (L) ermittelt, und dann rückgepolt, wenn die Schweißspannung (U) größer als der Spannungsschwellwert (U_{S+}, U_{S-}), und bzw. oder der Schweißstrom (I) kleiner als der Stromschwellwert (I_{S+}, I_{S-}), und bzw. oder die ermittelte Leistung (P) kleiner als ein voreingestellter Leistungsschwellwert (P_{S}) ist.

## Beschreibung

Die Erfindung betrifft ein Verfahren zum Schweißen mit einer nichtabschmelzenden Elektrode, insbesondere einer Wolfram-Elektrode, wobei von einer Stromquelle ein mit einer Schweißfrequenz in der Polarität wechselnder Schweißstrom zwischen der Elektrode und einem Werkstück zur Bildung eines Lichtbogens eingeprägt wird, und nach einem Wechsel der Polarität die Schweißspannung und der Schweißstrom zwischen der Elektrode und dem Werkstück gemessen wird und die Spannung mit einem voreingestellten Spannungsschwellwert und der Schweißstrom mit einem voreingestellten Stromschwellwert verglichen wird, und auf die Polarität vor dem Wechsel der Polarität rückgepolt wird, wenn die Spannung oberhalb des Spannungsschwellwerts und der Schweißstrom unterhalb des Stromschwellwerts liegt.

Weiters betrifft die Erfindung eine Vorrichtung zum Schweißen mit einer nichtabschmelzenden Elektrode, insbesondere einer Wolfram-Elektrode, mit einer Stromquelle zum Einprägen eines mit einer Schweißfrequenz in der Polarität wechselnden Schweißstroms zwischen der Elektrode und einem Werkstück zur Bildung eines Lichtbogens, und mit einer Steuereinrichtung, welche zur Messung der Schweißspannung zwischen der nichtabschmelzenden Elektrode und dem Werkstück und des Schweißstromes nach dem Wechsel der Polarität und zum Vergleich der gemessenen Spannung mit einem voreingestellten Spannungsschwellwert und des gemessenen Schweißstroms mit einem voreingestellten Stromschwellwert ausgebildet ist.

Beim Schweißen mit einer nichtabschmelzenden Elektrode, insbesondere beim WIG (Wolfram Inertgas)-Schweißen mit einer Wolfram-Elektrode, brennt der Lichtbogen zwischen dem Ende der nichtabschmelzenden Elektrode und dem Werkstück. Der Zusatzwerkstoff wird in Form von Drähten oder Stäben in den Lichtbogen gehalten und geschmolzen. Grundsätzlich kann das Schweißverfahren mit nichtabschmelzender Elektrode sowohl mit Gleichstrom als auch mit Wechselstrom durchgeführt werden. Bei Werkstücken aus Materialien, welche zur Ausbildung einer Oxidschicht neigen, beispielsweise Aluminium oder Magnesium, wird vorwiegend Wechselstrom, also ein Schweißstrom mit abwechselnder Polarität, eingesetzt. Bei der positiven Polarität, also einer Pluspolung der nichtabschmelzenden Elektrode gegenüber dem Werkstück kann die Oxidschicht aufgebrochen werden, wohingegen bei der negativen Polarität Wärmeenergie in das Werkstück eingebracht und somit die Schweißung vorgenommen wird. Dementsprechend wird üblicherweise die Dauer der positiven Polarität, also die positive Schweißstromzeit, kleiner als die Dauer der negativen Polarität, also der negativen Schweißstromzeit, gewählt.

Grundsätzlich ist die vorliegende Erfindung auch beim Schweißen mit abschmelzender Elektrode, wobei die Polarität des Schweißstromes umgepolt wird, anwendbar. Beispielsweise wird beim MIG (Metall-Inert-Gas)-Schweißen von Aluminium während der Lichtbogenphase die Polarität des Schweißstromes gewechselt.

Beispielsweise beschreibt die EP 2 431 119 B1 ein solches Wechselstrom-Schweißverfahren und eine Wechselstrom-Schweißvorrichtung.

Gelingt es während des Umpolvorgangs von positiver zu negativer Polarität oder von negativer zu positiver Polarität nicht einen Lichtbogen zu zünden, kann die Bearbeitbarkeit der Oberfläche des Werkstücks stark eingeschränkt werden. Zudem würde es zu einer Abkühlung des Schmelzbades kommen, wodurch kein stabiler Schweißprozess mehr möglich ist.

Üblicherweise wird daher nach einem Wechsel der Polarität die Schweißspannung und bzw. oder der Schweißstrom überwacht. Eine zu hohe Schweißspannung bzw. ein zu geringer Schweißstrom ist ein Indiz dafür, dass der Lichtbogen nach dem Polaritätswechsel nicht gezündet werden konnte. In einem solchen Fall wird wieder auf die vorhergehende Polarität zurückgewechselt bzw. rückgepolt.

Beispielsweise beschreibt die EP 0 586 325 B1 sowie die bereits oben genannte EP 2 431 119 B1 ein Schweißverfahren der gegenständlichen Art mit einer solchen Rückpolung, wenn keine Wiederzündung des Lichtbogens gelingt.

Nachteilig bei bekannten Schweißverfahren mit einer solchen Möglichkeit der Rückpolung ist, dass aufgrund der Schweißkreisinduktivitäten Verzögerungen beim Einbruch der Schweißspannung bzw. beim Anstieg des Schweißstromes, welche die Rückpolbedingungen darstellen, auftreten und falsche Werte der Schweißspannung und des Schweißstromes zugrundegelegt werden. Somit findet eine Rückpolung statt, obwohl der Lichtbogen mit einer Verzögerung gezündet hätte. Dadurch entstehen Instabilitäten während des Schweißverfahrens, was wiederum Qualitätseinbußen (mangelnde Reinigung der Oberfläche des Werkstücks bzw. verringerter Energieeintrag in das Werkstück) bei der Schweißnaht mit sich bringen kann.

Die Aufgabe der vorliegenden Erfindung besteht in der Schaffung eines oben genannten Verfahrens und einer oben genannten Vorrichtung zum Schweißen mit einer nichtabschmelzenden Elektrode, welche durch eine sicherere Rückpolung im Falle einer fehlenden Wiederzündung des Lichtbogens stabiler abläuft, wodurch eine höhere Schweißqualität resultiert. Das erfindungsgemäße Verfahren und die erfindungsgemäße Vorrichtung sollen möglichst einfach und kostengünstig realisierbar sein. Nachteile bekannter Verfahren und Vorrichtungen sollen vermieden oder zumindest reduziert werden.

Gelöst wird die erfindungsgemäße Aufgabe in verfahrensmäßiger Hinsicht dadurch, dass die Schweißspannung und der Schweißstrom nach einer voreingestellten Zeitdauer nach dem Wechsel der Polarität mit dem Spannungsschwellwert und dem Stromschwellwert verglichen wird, und zusätzlich die Leistung am Lichtbogen ermittelt wird, und die Polarität dann auf die Polarität vor dem Wechsel der Polarität rückgepolt wird, wenn die Schweißspannung größer als der Spannungsschwellwert, und bzw. oder der Schweißstrom kleiner als der Stromschwellwert, und bzw. oder die ermittelte Leistung kleiner als ein voreingestellter Leistungsschwellwert ist. Durch das Einlegen der erfindungsgemäßen Wartezeit bis die gemessene Schweißspannung und der gemessene Schweißstrom mit dem Spannungsschwellwert und dem Stromschwellwert verglichen wird, können die oben beschriebenen Einflüsse und Verzögerungen aufgrund der Induktivitäten ausgeschaltet werden und verlässliche Ergebnisse für die Entscheidung einer Rückpolung geschaffen werden. Üblicherweise werden die Schweißspannung und der Schweißstrom laufend gemessen. Wichtig beim vorliegenden Verfahren ist, dass die Messwerte nach Ablauf der voreingestellten Zeitdauer nach dem Wechsel der Polarität für den Vergleich mit dem Spannungsschwellwert und dem Stromschwellwert herangezogen werden. Zusätzlich dazu, dass für den Vergleich der Messwerte mit den Schwellwerten die voreingestellte Zeitdauer gewartet wird, kann eine dritte Bedingung für die Rückpolung, nämlich die Abfrage, ob die Leistung am Lichtbogen einen voreingestellten Leistungsschwellwert erreicht hat, stattfinden. Dadurch kann eine noch verlässlichere Aussage darüber getroffen werden, ob eine Wiederzündung des Lichtbogens gelungen ist oder nicht. Wenn der Lichtbogen nicht gezündet werden konnte, erfolgt anstelle einer Umpolung auf die andere Polarität eine Rückpolung auf die vorige Polarität. In der Folge resultiert ein stabileres Schweißverfahren und auch eine höhere Schweißqualität. Das Verfahren ist relativ einfach und kostengünstig umsetzbar, indem die vorgesehenen Verfahrensschritte in einer üblicherweise vorhandenen Steuereinrichtung der Schweißvorrichtung umgesetzt werden. Dies erfolgt in der Regel softwaremäßig in einem entsprechenden Mikroprozessor oder Mikrocontroller. Je nach Polarität sind die Spannungsschwellwerte und Stromschwellwerte positiv oder negativ. Theoretisch kann sich der jeweilige positive Spannungsschwellwert und positive Stromschwellwert vom negativen Spannungsschwellwert und negativen Stromschwellwert betragsmäßig unterscheiden. Diese Schwellwerte werden ebenso wie der Leistungsschwellwert und die voreingestellte Zeitdauer empirisch ermittelt und in einem entsprechenden Speicher oder einer Datenbank hinterlegt. Auch die voreingestellte Zeitdauer kann für den Wechsel von positiver Polarität zu negativer Polarität theoretisch unterschiedlich zur voreingestellten Zeitdauer beim Wechsel von negativer Polarität zu positiver Polarität gewählt werden. Prinzipiell ist es offen, ob die Rückpolbedingungen nur beim Wechsel von positiver Polarität zu negativer Polarität oder von negativer Polarität zu positiver Polarität durchgeführt wird und ob die Rückpolbedingung bei jedem dieser Polaritätswechsel aktiviert wird.

Vorzugsweise wird nach jedem Wechsel der Polarität des Schweißstromes von negativer Polarität zu positiver Polarität die Schweißspannung und der Schweißstrom nach der voreingestellten Zeitdauer nach dem Wechsel der Polarität mit dem Spannungsschwellwert und dem Stromschwellwert verglichen, und zusätzlich die Leistung am Lichtbogen ermittelt, und die Polarität auf die negative Polarität rückgepolt, wenn die Schweißspannung größer als der voreingestellte Spannungsschwellwert, und bzw. oder der Schweißstrom kleiner als der Stromschwellwert, und bzw. oder die ermittelte Leistung kleiner als der voreingestellte Leistungsschwellwert ist. Es macht durchaus Sinn, die Bedingungen für die allfällige Rückpolung bei jedem dieser Polaritätswechsel vorzunehmen.

Alternativ oder zusätzlich dazu kann nach jedem Wechsel der Polarität des Schweißstromes von positiver Polarität zu negativer Polarität die Schweißspannung und der Schweißstrom nach der voreingestellten Zeitdauer nach dem Wechsel der Polarität mit dem Spannungsschwellwert und dem Stromschwellwert verglichen wird, und zusätzlich die Leistung am Lichtbogen ermittelt, und die Polarität auf die positive Polarität rückgepolt, wenn die Schweißspannung größer als der voreingestellte Spannungsschwellwert, und bzw. oder der Schweißstrom kleiner als der Stromschwellwert, und bzw. oder die ermittelte Leistung kleiner als der voreingestellte Leistungsschwellwert ist. Idealerweise werden bei allen Polaritätswechseln die Bedingungen für eine Rückpolung überprüft und bei Erfüllung zumindest einer der Bedingungen die Rückpolung durchgeführt.

Vorteilhafterweise wird eine Zeitdauer von 5 µs bis 500 ms voreingestellt. Dies sind bei üblichen Induktivitäten des Schweißsystems geeignete Werte für die voreinstellbare Zeitdauer, bei deren Einhaltung verlässlichere Ergebnisse resultieren.

Die Leistung am Lichtbogen wird gemäß einem weiteren Merkmal der Erfindung aus dem Produkt der Schweißspannung und dem Schweißstrom ermittelt. Dies stellt eine einfache Berechnungsmethode über die ohnedies vorhandenen Werte der Schweißspannung und des Schweißstromes dar.

Vorteilhafterweise wird als eine der Bedingungen für die Rückpolung die ermittelte Leistung am Lichtbogen mit einem voreingestellten Leistungsschwellwert von 3 W bis 3000 W verglichen. Dieser Wertebereich ist bei üblichen Verfahren zum Schweißen mit nichtabschmelzenden Elektroden, insbesondere WIG-Schweißverfahren, ein geeigneter Indikator für das Zünden des Lichtbogens.

Der Schweißstrom wird mit einer Schweißfrequenz von 30 Hz bis 2000 Hz gewechselt. Diese Werte sind für die Durchführung von Schweißverfahren mit nichtabschmelzender Elektrode besonders geeignet. Dementsprechend beträgt die Periodendauer zwischen 500 µs und 33 ms.

Der Schweißstrom wird vorteilhafterweise zwischen einer Zeit der positiven Polarität, welche 30% bis 40% der Periodendauer beträgt, und einer Zeit der negativen Polarität, welche 60% bis 70% der Periodendauer beträgt, gewechselt. Wie bereits oben erwähnt, wird die Zeit der positiven Polarität, welche zum Aufbrechen der Oxidschicht des Werkstücks verwendet wird, geringer gewählt als die Zeit der negativen Polarität, während der die Energie- oder Wärmeeinbringung in das Werkstück erfolgt. Die angegebenen Bereiche stellen vorteilhafte Werte für diese Zeiten dar.

Gelöst wird die erfindungsgemäße Aufgabe auch durch eine oben genannte Vorrichtung zum Schweißen mit einer nichtabschmelzenden Elektrode, wobei die Steuereinrichtung zur Durchführung des oben beschriebenen Verfahrens ausgebildet ist. Zu den dadurch erzielbaren Vorteilen wird auf die obige Beschreibung des Verfahrens verwiesen. Die erfindungsgemäße Vorrichtung ist relativ einfach und kostengünstig implementierbar. Üblicherweise sind bei derartigen Schweißvorrichtungen bereits Möglichkeiten der Messung der Spannung und des Stromes und eine entsprechende Steuereinrichtung vorhanden, welche dann entsprechend dem oben beschriebenen Verfahren adaptiert werden muss. Dies erfolgt in der Regel softwaremäßig.

Die vorliegende Erfindung wird anhand der beigefügten Zeichnungen näher erläutert. Darin zeigen:
- Fig. 1: ein schematisches Blockschaltbild einer Vorrichtung zum Schweißen mit einer nichtabschmelzenden Elektrode;
- Fig. 2: die zeitlichen Verläufe des Schweißspannung, des Schweißstromes und der Leistung am Lichtbogen bei einem normalen Betrieb einer Vorrichtung zum Schweißen mit einer nichtabschmelzenden Elektrode;
- Fig. 3: die zeitlichen Verläufe des Schweißspannung, des Schweißstromes und der Leistung am Lichtbogen beim Eintritt einer erfindungsgemäßen Rückpolung auf die negative Polarität;
- Fig. 4: die zeitlichen Verläufe des Schweißspannung, des Schweißstromes und der Leistung am Lichtbogen beim Eintritt einer erfindungsgemäßen Rückpolung auf die positive Polarität; und
- Fig. 5: ein Flussdiagramm zur Veranschaulichung des erfindungsgemäßen Verfahrens zum Schweißen mit einer nichtabschmelzenden Elektrode.

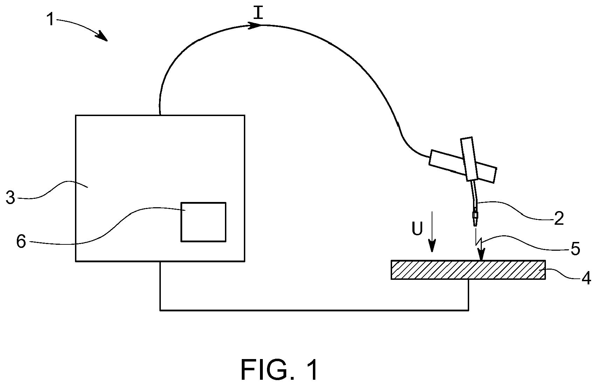

Fig. 1 zeigt ein schematisches Blockschaltbild einer Vorrichtung 1 zum Schweißen mit einer nichtabschmelzenden Elektrode 2, insbesondere einer Vorrichtung 1 zum WIG (Wolfragm Inertgas)-Schweißen mit einer Wolfram-Elektrode. Eine Stromquelle 3 wird sowohl mit der nichtabschmelzenden Elektrode 2 als auch mit dem Werkstück 4 aus elektrisch leitfähigem Material verbunden. Die Stromquelle 3 prägt einen mit einer Schweißfrequenz fₛ in der Polarität wechselnden Schweißstroms I zwischen der nichtabschmelzenden Elektrode 2 und dem Werkstück 4 ein. Dadurch wird sowohl in der Phase der positiven Polarität + als auch in der Phase der negativen Polarität - jeweils ein Lichtbogen 5 zwischen dem Ende der nichtabschmelzenden Elektrode 2 und dem Werkstück 4 gezündet. Über eine üblicherweise in der Stromquelle 3 befindliche Steuereinrichtung 6 werden die zeitlichen Abläufe gesteuert und die jeweiligen Werte des Schweißstromes I und der Schweißspannung U geregelt. Darüber hinaus ist die Steuereinrichtung 6 zur Messung der Schweißspannung U zwischen der nichtabschmelzenden Elektrode 2 und dem Werkstück 4 und zur Messung des Schweißstromes I nach dem Wechsel der Polarität ausgebildet.

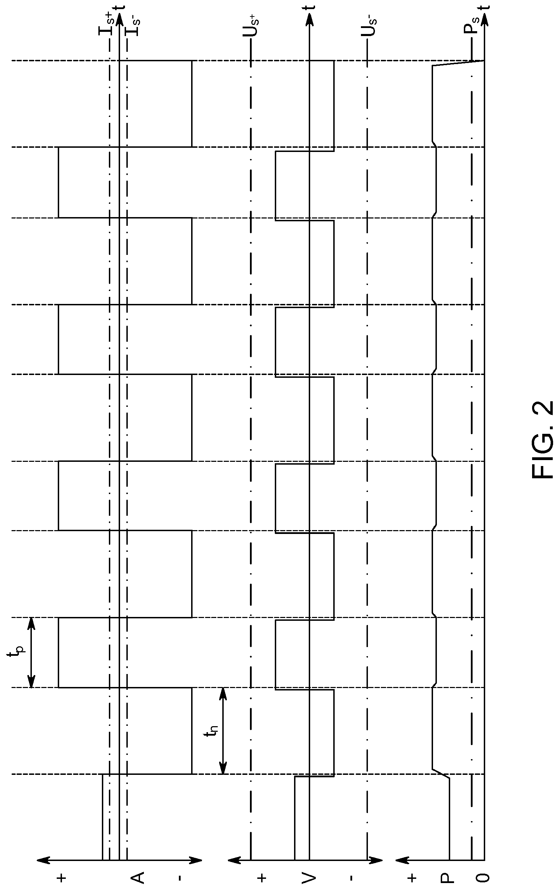

Fig. 2 zeigt die zeitlichen Verläufe des Schweißspannung U, des Schweißstromes I und der Leistung P am Lichtbogen 5 bei einem normalen Betrieb einer Vorrichtung 1 zum Schweißen mit einer nichtabschmelzenden Elektrode 2. Nach einer Startphase wird der Schweißstrom I mit negativer Polarität - mit einem bestimmten negativen Schweißstrom eingeprägt. Nach Ablauf der Zeit tₙ der negativen Polarität - wird in die positive Polarität + umgepolt.

Nach Ablauf der Zeit tₚ der positiven Polarität wird wieder umgepolt. Im Gegensatz zur Praxis sind hier die Zeiten tₙ der negativen Polarität - und die Zeiten tₚ der positiven Polarität im Wesentlichen gleich lang eingezeichnet. Die resultierende Schweißspannung U in Abhängigkeit der Zeit t ist im zweiten Diagramm dargestellt. Im dritten Zeitdiagramm ist die Leistung P am Lichtbogen 5 in Abhängigkeit der Zeit t wiedergegeben. Erfindungsgemäß sind für die negative Polarität - und die positive Polarität + Spannungsschwellwerte Uₛ₋ und Uₛ₊ und Stromschwellwerte Iₛ₋ und Iₛ₊ festgelegt, mit welchen die gemessenen Werte der Schweißspannung U und des Schweißstromes I verglichen werden, als Bedingungen, ob eine Rückpolung stattfinden soll. Erfindungsgemäß wird auch ein Leistungsschwellwert Pₛ eingeführt, mit dem die gemessene bzw. aus der Schweißspannung U und dem Schweißstrom I ermittelte Leistung P am Lichtbogen 5 als weitere Bedingung für die Rückpolung verglichen wird. In Figur 2 ist der Fall dargestellt, bei dem es in jedem Fall bzw. bei jeder Polarität zu einer Wiederzündung des Lichtbogens 5 kommt und somit keine Rückpolung notwendig ist, sondern immer zu den vorgegebenen Zeiten zur nächsten Polarität umgepolt wird.

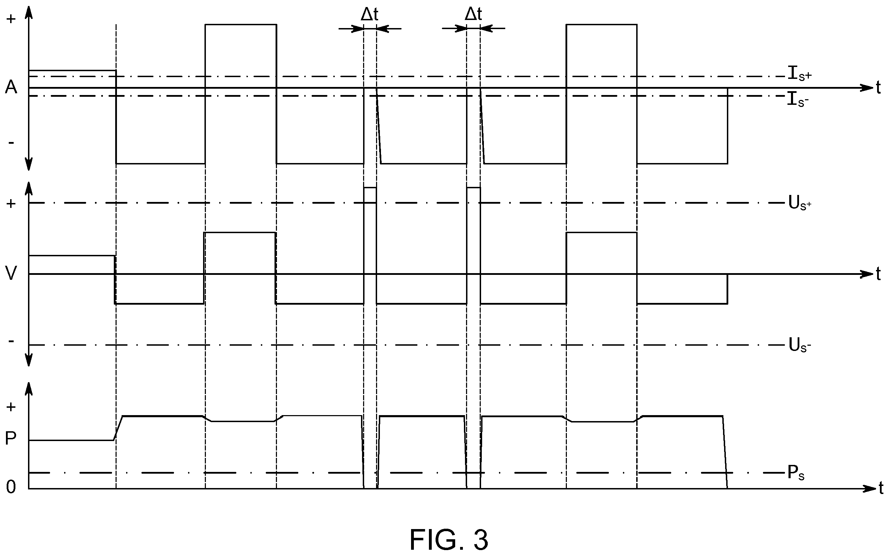

In Fig. 3 sind die zeitlichen Verläufe des Schweißspannung U, des Schweißstromes I und der Leistung P am Lichtbogen beim Eintritt einer erfindungsgemäßen Rückpolung auf die negative Polarität - dargestellt. Hierbei wird beim Umpolen von der negativen Polarität - zur positiven Polarität + die voreingestellte Zeitdauer Δt gewartet und die Bedingungen
1. U > Uₛ₊
2. I< Iₛ₊
3. P < Pₛ
überprüft. Wenn zumindest eine dieser Bedingungen erfüllt ist, stellt dies ein Indiz für ein Fehlschlagen der Zündung des Lichtbogens dar, weshalb auf die vorige Polarität, im dargestellten Beispiel die negative Polarität - rückgepolt wird. Im dargestellten Ausführungsbeispiel wird beim zweiten und dritten Wechsel der Polarität von negativer Polarität - zu positiver Polarität + jeweils wieder zur negativen Polarität - des Schweißstromes I rückgepolt. Nach einer oder zwei Rückpolungen gelingt es schließlich, die Oxidschicht des Werkstücks aufzubrechen, sodass der Lichtbogen wiedergezündet werden kann. In diesem Fall wird wieder normal zur nächsten Polarität umgepolt. Sofern es nicht gelingt, die Oxidschicht aufzubrechen, können auch sehr lange Phasen der negativen Polarität - resultieren.

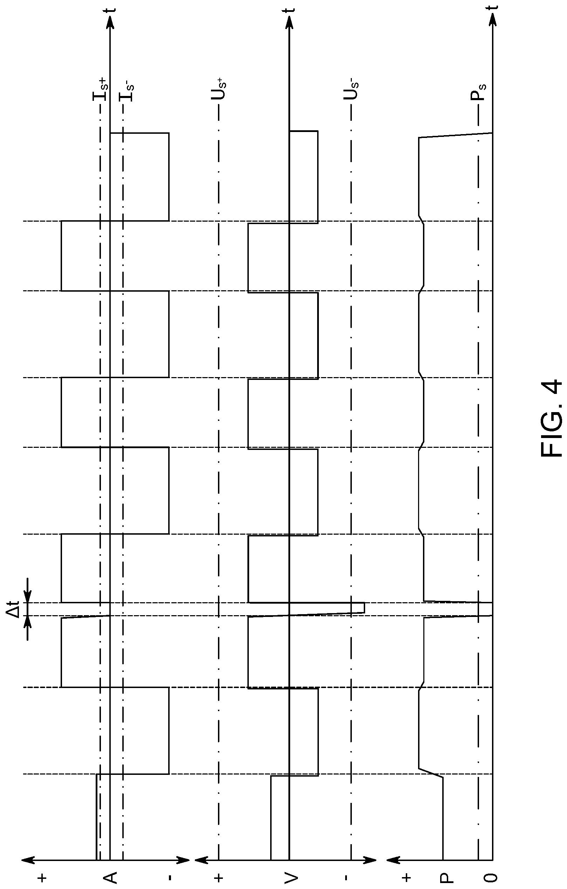

Fig. 4 zeigt die zeitlichen Verläufe des Schweißspannung U, des Schweißstromes I und der Leistung P am Lichtbogen beim Eintritt einer erfindungsgemäßen Rückpolung auf die positive Polarität +. Hierbei wird beim Umpolen von der positiven Polarität + zur negativen Polarität - die voreingestellte Zeitdauer Δt gewartet und die Bedingungen
1. U > U_{S-}
2. I< I_{S-}
3. P < P_{S}
überprüft. Wenn zumindest eine dieser Bedingungen erfüllt ist, stellt dies ein Indiz für ein Fehlschlagen der Zündung des Lichtbogens dar, weshalb auf die vorige Polarität, im dargestellten Beispiel die positive Polarität + rückgepolt wird. Im dargestellten Ausführungsbeispiel wird beim ersten Wechsel der Polarität von positiver Polarität + zu negativer Polarität - wieder zur positiven Polarität + des Schweißstromes I rückgepolt. Nach einer Rückpolung gelingt es schließlich, den Lichtbogen während der positiven Polarität + wiederzuzünden. Deshalb wird dann wieder normal zur nächsten Polarität umgepolt. Wenn keine Oxidschicht gebildet wird, können auch lange Phasen der positiven Polarität - resultieren.

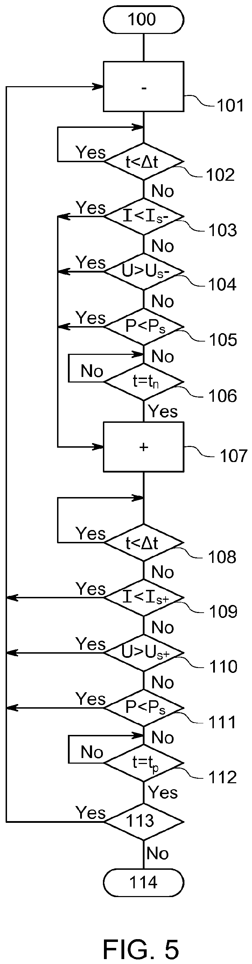

Schließlich zeigt Fig. 5 ein Flussdiagramm zur Veranschaulichung des erfindungsgemäßen Verfahrens zum Schweißen mit einer nichtabschmelzenden Elektrode. Bei Block 100 wird das Verfahren zum Schweißen mit nichtabschmelzender Elektrode gestartet. Nach dem Start wird ein Schweißstrom I mit negativer Polarität - eingeprägt (Block 101), worauf die voreingestellte Zeitdauer Δt gewartet wird (Block 102), bevor die Messwerte des Schweißstromes I mit dem voreingestellten Stromschwellwert Iₛ₋ verglichen wird (Block 103). Wenn der Schweißstrom I kleiner als dieser voreingestellte Stromschwellwert Iₛ₋ ist, wird zur positiven Polarität + rückgepolt, indem zu Block 107 gesprungen wird. Wenn der Schweißstrom I größer oder gleich dem voreingestellten Stromschwellwert Iₛ₋ ist, wird mit Abfrage 104 fortgesetzt. Hier wird die Schweißspannung U mit dem voreingestellten Spannungsschwellwert Uₛ₋ verglichen. Wenn die Schweißspannung U größer als dieser voreingestellte Spannungsschwellwert Uₛ₋ ist, wird zur positiven Polarität + rückgepolt, indem zu Block 107 gesprungen wird. Wenn die Schweißspannung U kleiner oder gleich dem voreingestellten Spannungsschwellwert Uₛ₋ ist, wird mit Abfrage 105 fortgesetzt. Hier wird die Leistung P beispielsweise aus der Schweißspannung U und dem Schweißstrom I ermittelt und mit dem voreingestellten Leistungsschwellwert Pₛ verglichen. Wenn die Leistung P kleiner als dieser voreingestellte Leistungsschwellwert Pₛ ist, wird zur positiven Polarität + rückgepolt, indem zu Block 107 gesprungen wird. Wenn die Leistung P größer oder gleich dem voreingestellten Leistungsschwellwert Pₛ ist, wird bis zum Ablauf der Zeit tₙ der negativen Polarität - gewartet (Block 106) und dann zur positiven Polarität + umgepolt (Block 107).

Nach dem Umpolen auf die positive Polarität + wird die voreingestellte Zeitdauer Δt (welche sich theoretisch von der voreingestellten Zeitdauer Δt beim Wechsel auf die negative Polarität - gemäß Abfrage 102 unterscheiden kann) gewartet (Block 108), bevor die Messwerte des Schweißstromes I mit dem voreingestellten Stromschwellwert Iₛ₊ verglichen wird (Block 109). Wenn der Schweißstrom I kleiner als dieser voreingestellte Stromschwellwert Iₛ₊ ist, wird zur negativen Polarität - rückgepolt, indem zu Block 101 gesprungen wird. Wenn der Schweißstrom I größer oder gleich dem voreingestellten Stromschwellwert Iₛ₊ ist, wird mit Abfrage 110 fortgesetzt. Hier wird die Schweißspannung U mit dem voreingestellten Spannungsschwellwert Uₛ₊ verglichen. Wenn die Schweißspannung U größer als dieser voreingestellte Spannungsschwellwert Uₛ₊ ist, wird zur negativen Polarität - rückgepolt, indem zu Block 101 gesprungen wird. Wenn die Schweißspannung U kleiner oder gleich dem voreingestellten Spannungsschwellwert Uₛ₊ ist, wird mit Abfrage 111 fortgesetzt. Hier wird die Leistung P mit dem voreingestellten Leistungsschwellwert Pₛ verglichen. Wenn die Leistung P kleiner als dieser voreingestellte Leistungsschwellwert Pₛ ist, wird zur negativen Polarität - rückgepolt, indem zu Block 101 gesprungen wird. Wenn die Leistung P größer oder gleich dem voreingestellten Leistungsschwellwert Pₛ ist, wird bis zum Ablauf der Zeit tₚ der negativen Polarität - gewartet (Block 112) und dann zur Abfrage weitergegangen, ob das Verfahren fortgesetzt werden soll (Block 113). Gegebenenfalls wird auf negative Polarität - umgepolt, indem zu Block 101 gegangen wird. Soll das Verfahren gemäß Abfrage 113 beendet werden, wird die Abfolge beendet (Block 114).

Das Flussdiagramm gemäß Fig. 5 dient zur Veranschaulichung einer Variante des erfindungsgemäßen Verfahren. Selbstverständlich können die Vergleiche der Messwerte mit den Schwellwerten (Blöcke 103, 104, 105 bzw. 109, 110, 111) in beliebiger Reihenfolge erfolgen. Im dargestellten Flussdiagramm sind die Vergleiche der Messwerte mit den Schwellwerten in Form von logischen "Oder"-Verknüpfungen dargestellt. Es wären auch andere Verknüpfungen der Vergleiche entsprechend der Blöcke 103, 104, 105 bzw. 109, 110, 111 in Form von logischen "Und"- oder "Und/Oder"-Verknüpfungen denkbar.

## Patentansprüche

1. Verfahren zum Schweißen mit einer nichtabschmelzenden Elektrode (2), insbesondere einer Wolfram-Elektrode, wobei von einer Stromquelle (3) ein mit einer Schweißfrequenz (fₛ) in der Polarität wechselnder Schweißstrom (I) zwischen der Elektrode (2) und einem Werkstück (4) zur Bildung eines Lichtbogens (5) eingeprägt wird, und nach einem Wechsel der Polarität die Schweißspannung (U) und der Schweißstrom (I) zwischen der Elektrode (2) und dem Werkstück (4) gemessen wird und die Spannung (U) mit einem voreingestellten Spannungsschwellwert (Uₛ₊, Uₛ₋) und der Schweißstrom (I) mit einem voreingestellten Stromschwellwert (Iₛ₊, Iₛ₋) verglichen wird, und auf die Polarität vor dem Wechsel der Polarität rückgepolt wird, wenn die Spannung (U) oberhalb des Spannungsschwellwerts (Uₛ₊, Uₛ₋) und der Schweißstrom (I) unterhalb des Stromschwellwerts (Iₛ₊, Iₛ₋) liegt, **dadurch gekennzeichnet, dass** die Schweißspannung (U) und der Schweißstrom (I) nach einer voreingestellten Zeitdauer (Δt) nach dem Wechsel der Polarität mit dem Spannungsschwellwert (Uₛ₊, Uₛ₋) und dem Stromschwellwert (Iₛ₊, Iₛ₋) verglichen wird, und zusätzlich die Leistung (P) am Lichtbogen (L) ermittelt wird, und die Polarität dann auf die Polarität vor dem Wechsel der Polarität rückgepolt wird, wenn die Schweißspannung (U) größer als der Spannungsschwellwert (Uₛ₊, Uₛ₋), und bzw. oder der Schweißstrom (I) kleiner als der Stromschwellwert (Iₛ₊, Iₛ₋), und bzw. oder die ermittelte Leistung (P) kleiner als ein voreingestellter Leistungsschwellwert (Pₛ) ist.

2. Verfahren nach Anspruch 1, **dadurch gekennzeichnet, dass** nach jedem Wechsel der Polarität des Schweißstromes (I) von negativer Polarität (-) zu positiver Polarität (+) die Schweißspannung (U) und der Schweißstrom (I) nach der voreingestellten Zeitdauer (Δt) nach dem Wechsel der Polarität mit dem Spannungsschwellwert (Uₛ₊) und dem Stromschwellwert (Iₛ₊) verglichen wird, und zusätzlich die Leistung (P) am Lichtbogen (L) ermittelt wird, und die Polarität auf die negative Polarität (-) rückgepolt wird, wenn die Schweißspannung (U) größer als der voreingestellte Spannungsschwellwert (Uₛ₊), und bzw. oder der Schweißstrom (I) kleiner als der Stromschwellwert (Iₛ₊), und bzw. oder die ermittelte Leistung (P) kleiner als der voreingestellte Leistungsschwellwert (Pₛ) ist.

3. Verfahren nach Anspruch 1 oder 2, **dadurch gekennzeichnet, dass** nach jedem Wechsel der Polarität des Schweißstromes (I) von positiver Polarität (+) zu negativer Polarität (-) die Schweißspannung (U) und der Schweißstrom (I) nach der voreingestellten Zeitdauer (Δt) nach dem Wechsel der Polarität mit dem Spannungsschwellwert (Uₛ₋) und dem Stromschwellwert (Iₛ₋) verglichen wird, und zusätzlich die Leistung (P) am Lichtbogen (L) ermittelt wird, und die Polarität auf die positive Polarität (+) rückgepolt wird, wenn die Schweißspannung (U) größer als der voreingestellte Spannungsschwellwert (Uₛ₋), und bzw. oder der Schweißstrom (I) kleiner als der Stromschwellwert (Iₛ₋), und bzw. oder die ermittelte Leistung (P) kleiner als der voreingestellte Leistungsschwellwert (Pₛ) ist.

4. Verfahren nach einem der Ansprüche 1 bis 3, **dadurch gekennzeichnet, dass** eine Zeitdauer (Δt) von 5 µs bis 500 ms voreingestellt wird.

5. Verfahren nach einem der Ansprüche 1 bis 4, **dadurch gekennzeichnet, dass** die Leistung (P) am Lichtbogen (5) aus dem Produkt der Schweißspannung (U) und dem Schweißstrom (I) ermittelt wird.

6. Verfahren nach einem der Ansprüche 1 bis 5, **dadurch gekennzeichnet, dass** die ermittelte Leistung (P) am Lichtbogen (5) mit einem voreingestellten Leistungsschwellwert (Pₛ) von 3 W bis 3000 W verglichen wird.

7. Verfahren nach einem der Ansprüche 1 bis 6, **dadurch gekennzeichnet, dass** der Schweißstrom (I) mit einer Schweißfrequenz (fₛ) von 30 Hz bis 2000 Hz gewechselt wird.

8. Verfahren nach einem der Ansprüche 1 bis 7, **dadurch gekennzeichnet, dass** der Schweißstrom (I) zwischen einer Zeit (tₚ) der positiven Polarität, welche 30% bis 40% der Periodendauer (T) beträgt, und einer Zeit (tₙ) der negativen Polarität, welche 60% bis 70% der Periodendauer (T) beträgt, gewechselt wird.

9. Vorrichtung (1) zum Schweißen mit einer nichtabschmelzenden Elektrode (2), insbesondere einer Wolfram-Elektrode, mit einer Stromquelle (3) zum Einprägen eines mit einer Schweißfrequenz (fₛ) in der Polarität wechselnden Schweißstroms (I) zwischen der Elektrode (2) und einem Werkstück (4) zur Bildung eines Lichtbogens (5), und mit einer Steuereinrichtung (6), welche zur Messung der Schweißspannung (U) zwischen der nichtabschmelzenden Elektrode (2) und dem Werkstück (4) und des Schweißstromes (I) nach dem Wechsel der Polarität und zum Vergleich der gemessenen Spannung (U) mit einem voreingestellten Spannungsschwellwert (Uₛ₊, Uₛ₋) und des gemessenen Schweißstroms (I) mit einem voreingestellten Stromschwellwert (Iₛ₊, Iₛ₋) ausgebildet ist, **dadurch gekennzeichnet, dass** die Steuereinrichtung (6) zur Durchführung des Verfahrens nach einem der Ansprüche 1 bis 8 ausgebildet ist.
